# EUROPEAN PATENT SPECIFICATION

(11) **EP 2 277 374 B1**
(45) Date of publication and mention of the grant of the patent: **21.11.2012**
(21) Application number: 10158268.2
(22) Date of filing: 29.03.2010
(51) Int. Cl.: A01K 39/012

(54) **Feeding trough for poultry breeding**
Futtertrog zur Geflügelzucht
Mangeoire pour l'élevage de volailles

(30) Priority: 23.07.2009 IT TO20090099 U
(43) Date of publication of application: 26.01.2011
(73) Proprietor: GIORDANO POULTRY-PLAST S.p.A., I-12023 Caraglio (Cuneo) (IT)
(72) Inventor: Giordano, Enrico, 12023, Caraglio (Cuneo) (IT)
(74) Representative: Buzzi, Franco

(56) References cited:
- EP-A1- 0 988 787
- WO-A1-2008/023969
- DE-C- 408 264
- US-A- 609 755
- US-A- 2 512 260
- US-A- 3 780 703
- US-A- 5 558 040

## Description

### Field of the invention

The present invention relates in general to feeding troughs for poultry breeding, and regards more in particular a feeding trough for turkeys of the type comprising a top container provided with hanging means for hanging from a pipe for supply of the feed into the container, a bottom plate set coaxially underneath the container, and means for transferring selectively and in a regulatable way the feed from the top container to the bottom plate.

### State of the prior art

Feeding troughs of this type, an example of which is described and illustrated in the European patent application No. EP-0988787A1, can advantageously be used typically in turkey breeding farms both during the step of weaning of the chicks, and for subsequent fattening of the adult animal. In the weaning stage the means for transferring the feed carry out transfer thereof from the top container to the bottom plate, which is positioned in the vicinity of the ground for enabling feeding of the chicks. During the fattening stage, the flow of feed from the top container to the bottom plate is interrupted, and the feed is hence withheld within the top container, set at a greater distance from the ground for enabling feeding of the adult turkeys.

In both situations, it is possible to regulate with relative precision the flow of the feed coming from a feed line inside the breeding facility.

In the solution known from the aforesaid document No. EP-0988787A1, to enable selective and regulatable transfer of the feed from the top container to the bottom plate, an opening is provided between the bottom edge of the container and the bottom of the plate, and the plate can be displaced axially with respect to the container in such a way as to increase or decrease the opening for passage of the feed through the aforesaid opening, up to a position of total closing in which said opening is completely closed by the plate. This condition, corresponding to the end of the stage of weaning of the chicks and hence to the start of the stage of feeding of the adult turkeys, necessarily entails that the bottom plate will be kept permanently joined to the feeding trough, even though it is no longer used for feeding the animals. It would, instead, be desirable for the plate to be removed and cleaned out in such a way that it will be ready for reuse for a new subsequent cycle of weaning of chicks.

From DE-408264C a feeding trough for poultry breeding is also known, corresponding to the pre-characterizing part of claim 1 and enabling adjustment of the flow of the feed from the top container to the bottom plate. In this known trough the passages of the stationary part consist of a crown of circular holes cooperating with corresponding circular holes of the movable part: such an arrangement is subjected to the risk of clogging and moreover adjustment of the feed flow is relatively poor.

WO-2008/023969 discloses a feeding trough for poultry breeding which is also provided with hanging means for hanging from a feed supply pipe and is reflecting the pre-characterizing part of claim 1.

US-5558040A shows a feeding container having a housing with downwardly sloped channels, a feed tray and a door rotatably secured to the housing and having openings which control the amount of feed delivered from the housing to the tray through feed apertures aligned with the sloped channels.

US-2512260 discloses apertures in a feed container which can be closed by a movable element using monoeuvring fin-like element shutting off the flow of feed towards a lower plate.

### Summary of the invention

The object of the present invention is precisely to overcome the aforesaid drawback, and said object is achieved thanks to the features set forth in claim 1.

Thanks to this configuration, it is possible not only to regulate with greater precision the flow of the feed from the top container to the bottom plate, but also to shut off said flow completely without the need to keep the bottom plate applied against the bottom of the top container. This enables, by setting the open/close elements of the mobile part in the condition of complete closing of the openings for flow of the feed from the top container to the bottom plate, removal of said bottom plate at the end of the stage of weaning of the chicks and hence use of just the top container as feeding trough. The plate that has been removed can then be washed out and made available for a more immediate re-application to the top container when the feeding trough is again used for weaning other chicks.

### Brief description of the drawings

The invention will now be described in detail with reference to the annexed drawings, which are provided purely by way of non-limiting example and in which:

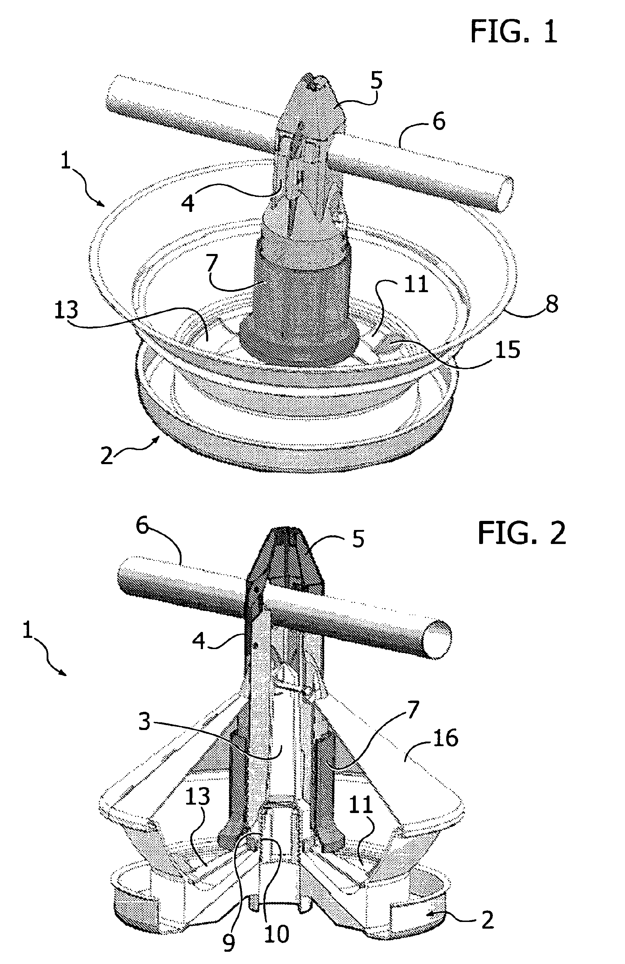

- Figure 1 is a schematic perspective view of a feeding trough for poultry breeding according to the invention;
- Figure 2 is a partially sectioned view of the feeding trough of Figure 1;
- Figure 3 is a perspective view from above, similar to that of Figure 1, which exemplifies functioning of the mobile part of the top container of the feeding trough;
- Figure 4 is a schematic view in vertical cross section that exemplifies the modes of use of the feeding trough; and

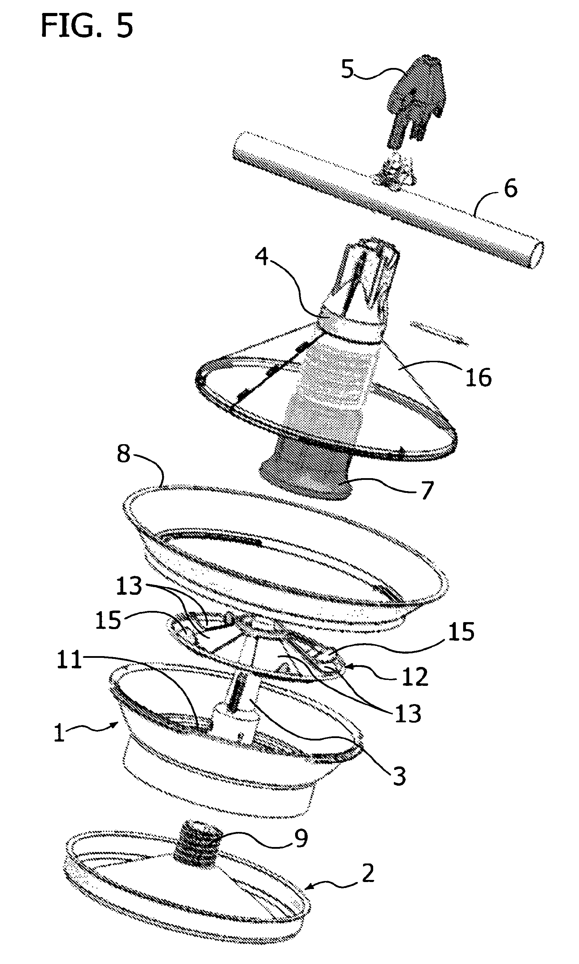

- Figure 5 is an exploded perspective view of the feeding trough.

### Detailed description of the invention

With reference to the drawings, the feeding trough according to the invention comprises a series of components made of high-strength moulded plastic material, which can be easily assembled and disassembled for enabling a fast replacement thereof in the case of wear or damage.

Said components basically include a top container 1, set underneath which is a bottom plate 2, and which has at the centre a tubular shank 3, which projects upwards and on which a hollow body 4 is inserted. The hollow body 4 can be fixed, via an attachment part 5, on a pipe 6 for supply of the feed within the hollow body 4, which is provided with one or more openings controlled by an axially slidable sleeve 7 for regulatable dispensing of the feed within the top container 1.

The tubular body 4 and the attachment 5 can also be connected to one another, instead of in a rigid way, via a hinged articulation.

The top container 1, generally having the shape of a truncated cone, can be provided at the top with a removable collar 8, which is designed to extend the useful internal volume thereof, as well as with a lid 16, which is also removable.

The bottom plate 2 has, in turn, an externally threaded central shank 9, which is screwed into an externally threaded seat 10 of the shank 3 of the top container 1. Screwing and unscrewing of the bottom plate 2 evidently produce its approach and recession, respectively, with respect to the bottom of the top container 1.

According to the peculiar characteristic of the invention, said bottom of the top container 1 includes a fixed part 11, formed with a radial array of openings 12, and a mobile part 13, formed with a radial array of sectors 14 having a shape complementary to that of the openings 12 and functioning as open/close elements for the latter. The mobile part 13 is mounted coaxially rotatable on the axial shank 3, in such a way that the open/close elements 14 can be displaced angularly between a position of complete opening in which they do not obstruct passage through the openings 12, and a position of complete closing in which said passage is, instead, occluded. Obviously, the mobile part 13 can be positioned in any intermediate position between that of complete opening and that of complete closing so as to vary the gaps for passage through the openings 12 accordingly. For its control in rotation there may be envisaged possible manoeuvring fins 15 that project from the open/close elements 14.

In operation, the feed coming from the pipe 6 is introduced, through the tubular body 3 and in a way regulated via the sleeve 7, within the top container 1. Through the openings 12 the feed can then reach the bottom plate 2, in an amount regulated both according to the axial position of said plate 1 with respect to the bottom of the top container 1 and by varying the angular position of the mobile part 13 with respect to the fixed part 11 of said bottom.

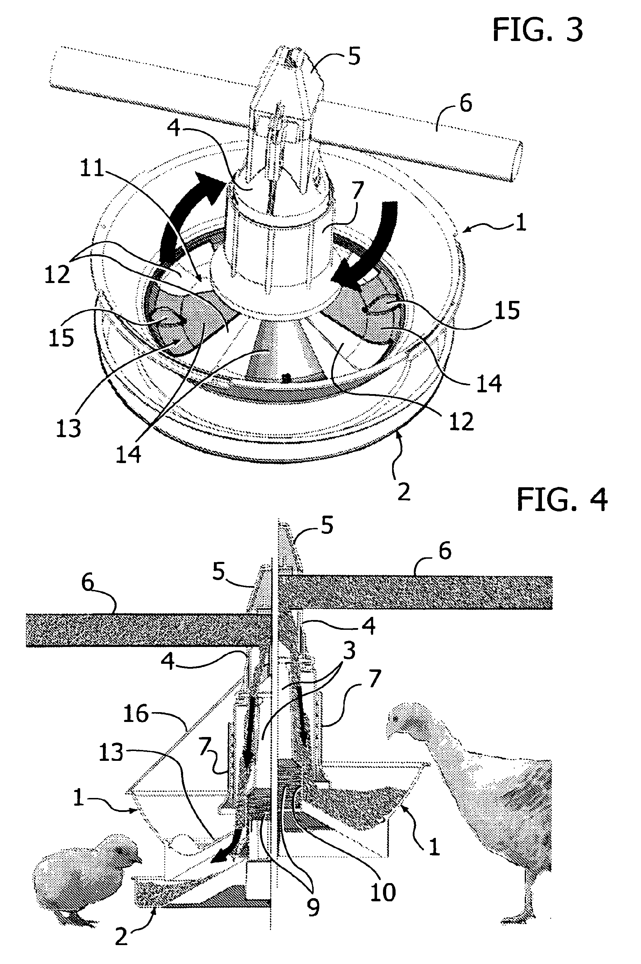

As may be seen in the left-hand part of Figure 4, during the stage of weaning of the chicks the flow of the feed from the top container 1 to the bottom plate 2 is maximum, this being evidently obtained by positioning the mobile part 13 in the condition of complete opening. The amount of feed from the pipe 6 into the top container 1, and then from this towards the bottom plate 2, is normally regulated to a minimum via the sleeve 7.

For feeding the adult turkeys the flow of the feed from the pipe 6 to the top container 1 is, instead, increased, once again via the sleeve 7, whilst the flow from the top container 1 to the plate 2 is prevented, by positioning the open/close elements 14 of the mobile part 13 in the condition of complete closing of the openings 12 of the fixed part 11, in the way represented in the right-hand part of Figure 4. The presence of the mobile part 13 enables, in said condition, complete removal of the bottom plate 2 so as to enable washing thereof in view to subsequent reuse, so that for feeding adult turkeys the feeding trough according to the invention can be reduced to the presence of just the top container 1.

## Claims

1. A feeding trough for poultry breeding, particularly for turkeys, comprising a top container (1) and a bottom plate (2) set coaxially underneath the top container (1), and means for transferring selectively and in a regulatable way the feed from the top container (1) to the bottom plate (2), wherein the bottom of the top container (1) comprises a stationary part (11) formed with passages (12) facing said bottom plate (2), and wherein the top container (1) is provided with hanging means (4, 5) for hanging from a pipe for supply (6) of the feed into the container, and wherein said bottom plate (2) can be separated and removed from said top container (1), said trough being **characterized in that** said passages (12) are arranged according to a radial array and the bottom of the top container (1) comprises a mobile part (13) formed with a radial array of open/close elements (14) complementary to said passages (12), said mobile part (13) being able to rotate coaxially with respect to the fixed part (11) between a position of complete opening and a position of complete closing of said passages (12), and said bottom plate (2) being provided with a central threaded shank (9) which is screwed into a threaded seat (10) of the top container (1) whereby screwing and unscrewing of the bottom plate (2) produces its approach and recession, respectively, with respect to the bottom of the top container (1).

## Patentansprüche

1. Futtertrog zur Geflügelzucht, insbesondere für Truthähne, umfassend einen oberen Behälter (1) und eine Bodenplatte (2), die koaxial unterhalb des oberen Behälters (1) gesetzt ist, sowie Mittel zum selektiven und auf regelbare Weise erfolgenden Verbringen des Futters von dem oberen Behälter (1) zu der Bodenplatte (2), wobei der Boden des oberen Behälters (1) einen stationären Teil (11) umfasst, der mit Durchlässen (12) ausgebildet ist, die zu der Bodenplatte (2) weisen, wobei der obere Behälter (1) mit Hängemitteln (4, 5) versehen ist, die von einem Zuführrohr (6) des Futters in den Behälter hineinhängen, und wobei die Bodenplatte (2) von dem oberen Behälter (1) getrennt und entfernt werden kann, wobei der Trog **dadurch gekennzeichnet ist, dass** die Durchlässe (12) entsprechend einer radialen Feldanordnung angeordnet sind und der Boden des oberen Behälters (1) einen mobilen Teil (13) umfasst, der mit einer radialen Feldanordnung von Öffnungs-/Schließelementen (14) ausgebildet ist, die komplementär zu den Durchlässen (12) sind, wobei sich der mobile Teil (13) koaxial in Bezug auf den festen Teil (1) zwischen einer Position der vollständigen Öffnung und einer Position der vollständigen Schließung der Durchlässe (12) drehen kann, wobei die Bodenplatte (2) mit einem zentralen Gewindeschaft (9) versehen ist, der in einen Gewindesitz (10) des oberen Behälters (1) geschraubt ist, wobei das Schrauben und Herausschrauben des Bodenplatte (2) dessen Vorrücken beziehungsweise Zurückgehen in Bezug auf den Boden des oberen Behälters (1) bewirkt.

## Revendications

1. Mangeoire pour l'élevage de volailles, en particulier de dindes, comprenant un contenant supérieur (1) et une plaque inférieure (2) placée de manière coaxiale au-dessous du contenant supérieur (1), et des moyens pour transférer sélectivement et d'une manière réglable, la nourriture du contenant supérieur (1) à la plaque inférieure (2), dans laquelle le fond du contenant supérieur (1) comprend une partie fixe (11) formée avec des passages (12) faisant face à ladite plaque inférieure (2), et dans laquelle le contenant supérieur (1) est prévu avec des moyens de suspension (4, 5) pour être suspendu à un tuyau pour amener (6) la nourriture dans le contenant, et dans laquelle ladite plaque inférieure (2) peut être séparée et retirée dudit contenant supérieur (1), ladite mangeoire étant **caractérisée en ce que** lesdits passages (12) sont agencés selon un agencement radial et le fond du contenant supérieur (1) comprend une partie mobile (13) formée avec un agencement radial d'éléments ouverts/fermés (14) complémentaires desdits passages (12), ladite partie mobile (13) pouvant tourner de manière coaxiale par rapport à la partie fixe (11) entre une position d'ouverture complète et une position de fermeture complète desdits passages (12), et ladite plaque inférieure (2) étant prévue avec une tige filetée centrale (9) qui est vissée dans un siège fileté (10) du contenant supérieur (1), moyennant quoi le vissage et le dévissage de la plaque inférieure (2) produit son approche et son recul, respectivement, par rapport au fond du contenant supérieur (1).
